(19) Europäisches Patentamt
European Patent Office
Office européen des brevets

(11) **EP 0 614 690 B1**

(12) **EUROPEAN PATENT SPECIFICATION**

(45) Date of publication and mention
of the grant of the patent:
**10.06.1998 Bulletin 1998/24**

(51) Int. Cl.[6]: **B01D 53/34**, B01D 53/56,
B01D 53/64, B01D 53/70

(21) Application number: **94301756.6**

(22) Date of filing: **11.03.1994**

(54) **Treatment of incinerator exhaust gas**

Behandlung von Abgas eines Verbrennungsofens

Traitement de gaz d'échappement d'une installation d'incinération

(84) Designated Contracting States:
**DE FR GB IT**

(30) Priority: **11.03.1993 JP 50648/93**

(43) Date of publication of application:
**14.09.1994 Bulletin 1994/37**

(73) Proprietor:
**KABUSHIKI KAISHA KOBE SEIKO SHO
Kobe-Shi, Hyogo 651 (JP)**

(72) Inventors:
• **Ito, Tadashi,
c/o KOBE STEEL, LTD.
Kobe-shi, Hyogo 651 (JP)**
• **Horii, Yuji,
c/o Kobe Coporate Research Lab.
Nishi-ku, Kobe-shi, Hyogo 651-22 (JP)**
• **Chichibu, Shigenori,
c/o Kobe Steel, Ltd.
Kobe-shi, Hyogo 651 (JP)**
• **Shiraishi, Yukihiro,
c/o Kobe Steel, Ltd.
Kobe-shi, Hyogo 651 (JP)**
• **Kawabata, Hiroaki,
c/o Kobe Steel, Ltd.
Kobe-shi, Hyogo 651 (JP)**

(74) Representative:
**Blake, John Henry Francis et al
Brookes & Martin
High Holborn House
52/54 High Holborn
London WC1V 6SE (GB)**

(56) References cited:
**EP-A- 0 199 023          FR-A- 2 324 579
GB-A- 1 351 950**

• **DATABASE WPI Section Ch, Week 9003, Derwent
Publications Ltd., London, GB; Class J01, AN
90-021376 & SU-A-1 473 858 (MAGN MINE
METAL INS) 23 April 1989**
• **DATABASE WPI Section Ch, Week 7506, Derwent
Publications Ltd., London, GB; Class E36, AN
75-10299W & SU-A-418 205 (RUBEZHANSK
KHARKOV POLY) 21 August 1974**

**Description**

BACKGROUND OF THE INVENTION

1. Field of the Invention:

The present invention relates to a method for treating incinerator exhaust gas and, more particularly, to a method for purifying exhaust gas evolved by incineration of wastes.

2. Description of the Prior Art:

Incineration is one way of disposing of municipal wastes and sludge efficiently and sanitarily. However, it gives off exhaust gas containing toxic substances such as dioxin, heavy metals, and $NO_x$. The exhaust gas has to be treated for the removal or reduction of such toxic substances before being discharged into the atmosphere. There have been proposed several methods for treatment as follows:

(1) One way of reducing dioxin is by adding a chemical agent such as $H_2S$, $NH_3$, triethanolamine, and triethylamine to the flue so as to prevent dioxin from being resynthesized in the steps of waste heat recovery and waste gas treatment. In addition, there is disclosed in Japanese Patent Laid-open No. 4918/1991 a method of adding an oxidizing agent (such as $O_3$ and $H_2O_2$) to the flue, thereby oxidizing aromatic hydrocarbons and derivatives thereof (which are the precursors of dioxin resynthesis) into HCl, $CO_2$, and $H_2O$.

(2) One way of reducing heavy metals (such as mercury) is disclosed in Japanese Patent Kohyo No. 504098/1991. According to this disclosure, waste gas is brought into contact with an aqueous solution or slurry containing one or more than one metal sulfide (e.g., sodium sulfide), so that gaseous heavy metals in waste gas are changed into sulfides and have their partial vapor pressure reduced. This increases the efficiency in removing heavy metals by a dust collector (such as bag filter) in the subsequent step.

(3) One way of reducing $NO_x$ is by two-stage combustion. This is described in "Kougai To Taisaku" (Vol. 114, No.5, special edition featuring the anti-pollution measure for sewage terminus treatment, "Measures against nitrogen oxides resulting from sludge incineration", p. 40). In addition, there is disclosed in Japanese Patent Application No. 141617/1992 a catalystless denitration process which employs ammonia solution or urea solution.

The conventional methods mentioned above are capable of reducing the amount of dioxin, heavy metals, and $NO_x$ in waste gas. However, they have a disadvantage of requiring additives for respective toxic substances. In other words, they need different additives according to the toxic substances to be reduced. Moreover, each additive has to be fed at a specific position, and as many additive feeders as the number of additives are necessary. This leads to a complex system for waste gas treatment which involves complex operation.

In SU-A-1473858 waste gas from coke ovens is treated with a mixture of ammonium compounds including ammonium persulfate.

EP-A-0199023 discloses a process for treating waste gas from cement kilns in which the waste gas is treated with various ammonium compounds including ammonium persulfate.

The present invention was completed to provide a method of treating incinerator waste gas in a simple way to reduce or remove dioxin, heavy metals, and $NO_x$ from waste gas by the aid of a single additive which is effective against all of them.

**SUMMARY OF THE INVENTION**

In a first aspect the present invention provides a method of treating incinerator waste gas comprising dioxin, heavy metals and $No_x$, which is passed from the incinerator through a flue to a dust collector by feeding solely ammonium persulfate as treating agent into the incinerator.

In a second aspect the present invention provides a method of treating incinerator waste gas, which is passed from the incinerator through a flue to a dust collector by feeding solely ammonium persulfate as treating agent into the flue as a position where the temperature exceeds 400°C so that the ammonium persulfate undergoes thermal decomposition.

In a third aspect the waste gas discharged from the dust collector in the second method above may be further introduced into a catalytic denitrating unit.

In a fourth aspect the amount of ammonium persulfate in the methods of the present invention, is preferably more than 0.01 g per $Nm^3$ of waste gas.

## BRIEF DESCRIPTION OF THE DRAWINGS

Fig. 1 is a schematic diagram showing the apparatus for treating incinerator waste gas in Example 1.

Fig. 2 is a horizontal sectional view taken at the position of the spray nozzle of the incinerator.

Fig. 3 is a schematic diagram showing the apparatus for treating incinerator waste gas in Example 2.

Fig. 4 is a graph showing the relation between the CO concentration in waste gas and the dioxin concentration at the inlet of the duct collector, which varies depending on whether or not ammonium persulfate is added.

Fig. 5 is a graph showing the relation between the temperature of the bag filter dust collector and the ratio of mercury removed, which varies depending on whether or not ammonium persulfate is added.

## DESCRIPTION OF THE PREFERRED EMBODIMENTS

According to the first aspect of the present invention, the treatment of incinerator waste gas is accomplished by feeding ammonium persulfate into the incinerator while waste gas is being led to the dust collector through the flue. The ammonium persulfate reduces the content of dioxin and $NO_x$ in waste gas, and it also enhances the efficiency in removing heavy metals by the dust collector in the subsequent step.

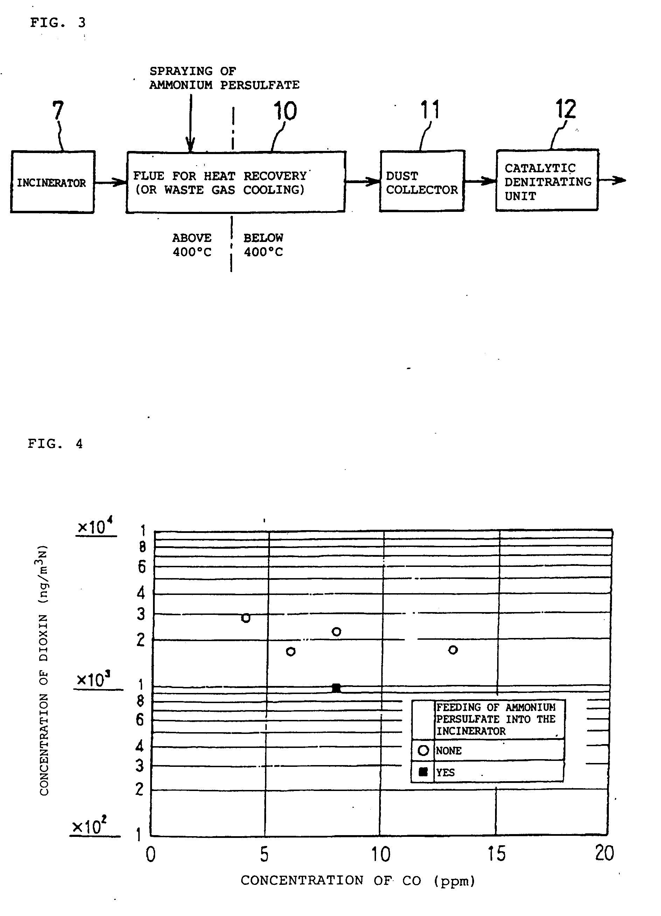

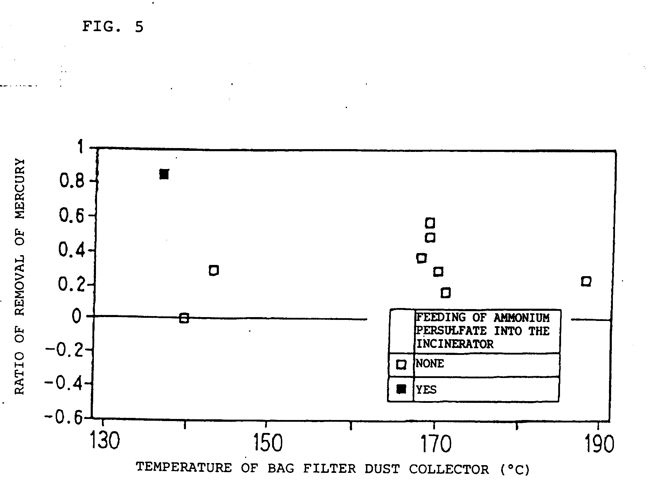

The fact that ammonium persulfate functions as mentioned above is a new finding at the result of extensive studies. Ammonium persulfate may be used in the form of 10% aqueous solution. Feeding the solution into the incinerator at a rate of 2 liters per minute (or 0.6 g of ammonium persulfate per $Nm^3$ of waste gas) reduces the concentration of dioxin in waste gas at the inlet of the dust collector as shown in Fig. 4, reduces the concentration of $NO_x$ in waste gas as shown in Table 1, and increases the ratio of removal of heavy metals (e.g., mercury) by the duct collector (e.g., bag filter) as shown in Fig. 5. It is noted from Fig. 4 that the content of dioxin is reduced by 42-66% when the dust collecting temperature is 140°C. It is noted from Table 1 that the concentration of $NO_x$ is reduced by 25-39%. It is noted from Fig. 5 that the ratio of removal of mercury is 0-58% when ammonium persulfate is not added, whereas it increases to 86% when it is added.

Table 1

| No. | 10% aqueous solution of ammonium persulfate | Concentration of $NO_x$ ($O_2$ 12%) | Ratio of denitration |
|---|---|---|---|
| 1 | not added | 139-158 ppm | - |
| 2 | 2 liters per minute | 97-104 ppm | 25-39% |

The reduction of the dioxin concentration is due to the ability of ammonium persulfate to suppress the resynthesis of dioxin. The reduction of $NO_x$ concentration and the increase of denitration ratio are because the ammonium persulfate fed into the incinerator undergoes thermal decomposition to yield $NH_3$ which in turn decomposes $NO_x$ as shown by the equation below.

$$4NO + 4NH_3 + O_2 \rightarrow 4N_2 + 6H_2O$$

The increased efficiency in removing heavy metals in the dust collector is due to the ability of ammonium persulfate to react with gaseous heavy metals in waste gas to change them into sulfides and to lower their partial pressure.

The feeding of ammonium persulfate into the incinerator according to the first aspect of the present invention reduces both dioxin and $NO_x$ in waste gas and hence improves the efficiency in removing heavy metals in the dust collector in the subsequent step. In other words, it is possible to reduce or remove dioxin, heavy metals, and $NO_x$ in waste by the aid of a single additive, ammonium persulfate. This implies that the additive can be fed through a single port and requires only one feeding unit. This leads to a simple system which is easy to operate for waste gas treatment.

According to the second aspect of the present invention, the treatment of incinerator waste gas is accomplished by feeding ammonium persulfate into the flue at its specific position where the temperature exceeds 400°C while waste gas is being led to the dust collector through the flue. The ammonium persulfate reduces dioxin in waste gas and increases the efficiency in removing heavy metals in the dust collector in the same manner as in the first aspect mentioned above. However, the ammonium persulfate acts on $NO_x$ in waste gas differently than in the first aspect. In other words, the ammonium persulfate fed into the flue at its specific position where the temperature exceeds 400°C undergoes thermal decomposition to yield $NH_3$. The amount of $NH_3$, however, is not enough to decompose $NO_x$ completely. Therefore, the waste gas leaving the dust collector should be introduced into the catalytic denitrating unit in which $NO_x$ is decomposed by $NH_3$. That is, ammonium persulfate yields, upon its thermal decomposition, $NH_3$ which is required

for catalytic denitration.

The effect of the second aspect of the present invention is that it is possible to reduce or remove dioxin, heavy metals, and $NO_x$ in waste gas in a simple manner by the aid of a single additive, ammonium persulfate, which is fed into the flue at its specific position where the temperature exceeds 400°C. It is necessary to select a proper feeding position as specified above so as to ensure that ammonium persulfate undergoes thermal decomposition to yield $NH_3$ for the subsequent catalytic denitration.

According to the third aspect of the present invention, the method pertaining to the second aspect is modified such that waste gas leaving the dust collector is introduced into the catalytic denitrating unit so as to ensure the reduction and removal of dioxin, heavy metals, and $NO_x$ in waste gas by the aid of a single additive, ammonium persulfate.

According to the fourth aspect of the present invention, ammonium persulfate should be fed in an amount more than 0.01 g per $Nm^3$ of waste gas (dry) so as to effectively remove toxic substances from waste gas.

EXAMPLES

Example 1

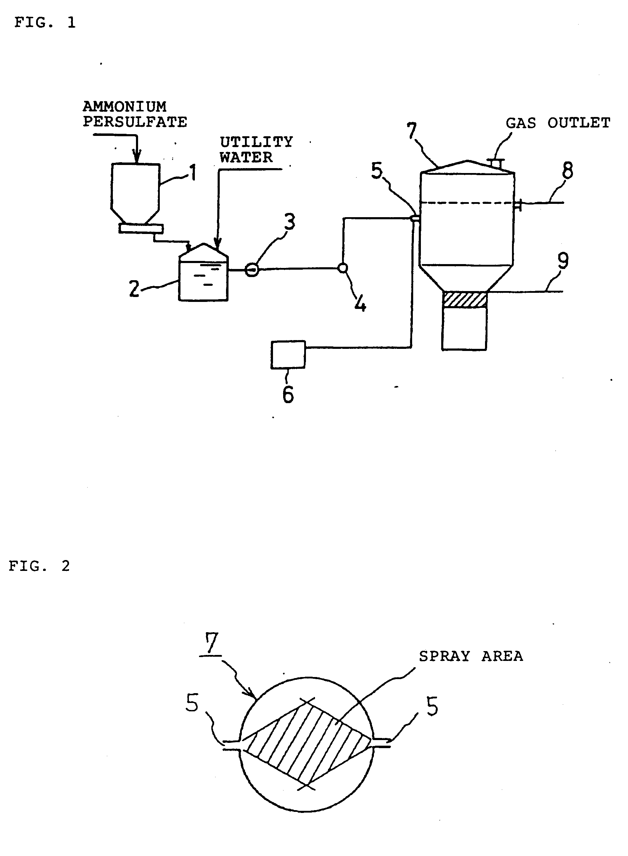

The method of the present invention is demonstrated by using an incineration system as schematically shown in Fig. 1. This system is made up of an incinerator (7), an ammonium persulfate feeding unit, a flue, and a dust collector (the last two are not shown). The incinerator (7) is of the fluidized bed type. The ammonium persulfate feeding unit is made up of a hopper (1), reservoir (2), pump (3), flowmeter (4), two-fluid spray nozzle (5), and air compressor (6).

The treatment of waste gas evolved by the incinerator (7) is carried out as follows. First, a prescribed amount of ammonium persulfate is fed from the hopper (1) into the reservoir (2) in which it is dissolved in water to prepare a 5-10% aqueous solution. The aqueous solution of ammonium persulfate is fed at a flow rate controlled by the flowmeter (4) into the incinerator (7) through the spray nozzle (5). Spraying is accomplished by compressed air supplied from the air compressor (6). The spray nozzle (5) should be positioned between the flame front (9) and the secondary air inlet (8). A position immediately below the secondary air inlet (8) is preferable. Spraying should be performed such that the spray covers more than 50% of the sectional area of the incinerator at the level of the secondary air inlet. To this end, it is desirable to install a plurality of spray nozzles (5).

Example 2

The method of the present invention is demonstrated by using an incineration system the flow sheet of which is shown in Fig. 3. This system is made up of an incinerator (7), a flue (10), a dust collector (11), and a catalytic denitrating unit (12). An ammonium persulfate supply unit (not shown) ia attached to the flue (10) at its specific position where the temperature exceeds 400°C. Using this system, the waste gas treatment is carried out by spraying an aqueous solution of ammonium persulfate into the flue (10) where the temperature exceeds 400°C.

It was confirmed that the waste gas treatment in Examples 1 and 2 effectively removes (or reduces) dioxin, heavy metals, and $NO_x$ in waste gas and hence effectively purifies waste gas.

The foregoing examples, Figs. 4 and 5, and Table 1 are not intended to restrict the conditions under which the method of the present invention is practiced. Thus it is necessary to make adequate adjustments for the concentration of ammonium persulfate solution, the amount of ammonium persulfate to be fed into the incinerator and flue, and the temperature of dust collection.

It was demonstrated in the above-foregoing that the method of the present invention effectively reduces or removes dioxin, heavy metals, and $NO_x$ in waste gas by the aid of a single additive, ammonium persulfate. Ammonium persulfate can be fed through only one port and requires only one feeding unit. Therefore, the method of the present invention permits waste gas treatment in a simple manner with a simple system.

**Claims**

1. A method of treating incinerator waste gas comprising dioxin, heavy metals and $NO_x$, which is passed from the incinerator through a flue to a dust collector, by feeding solely ammonium persulfate as treating agent into the incinerator.

2. A method of treating incinerator waste gas comprising dioxin, heavy metals and $NO_x$, which is passed from the incinerator through a flue to a dust collector, by feeding solely ammonium persulfate as treating agent into the flue at a position where the temperature exceeds 400°C so that the ammonium persulfate undergoes thermal decomposition.

3. A method according to claim 2, in which the waste gas discharged from the dust collector is introduced into a catalytic denitrating unit.

4. A method according to any one of claims 1 to 3, in which the ammonium persulfate is fed in an amount more than 0.01g per $Nm^3$ of dry waste gas.

**Patentansprüche**

1. Verfahren zur Behandlung eines Dioxin, Schwermetalle und $NO_x$ umfassenden Abfallgases aus Verbrennungsöfen, wobei das Abfallgas aus dem Verbrennungsofen durch einen Kamin zu einem Staubsammler geleitet und lediglich Ammoniumpersulfat als Behandlungsmittel in den Verbrennungsofen eingeführt wird.

2. Verfahren zur Behandlung eines Dioxin, Schwermetalle und $NO_x$ umfassenden Abfallgases aus Verbrennungsöfen, wobei das Abfallgas aus dem Verbrennungsofen durch einen Kamin zu einem Staubsammler geleitet und lediglich Ammoniumpersulfat als Behandlungsmittel in den Kamin an einer Position zugesetzt wird, an der die Temperatur 400°C übersteigt, so daß das Ammoniumpersulfat eine thermische Zersetzung erfährt.

3. Verfahren nach Anspruch 2, wobei das aus dem Staubsammler austretende Abfallgas in eine katalytische Denitrierungseinheit eingeleitet wird.

4. Verfahren nach einem der Ansprüche 1 bis 3, wobei Ammoniumpersulfat in einer Menge von mehr als 0,01 g pro $Nm^3$ an trockenem Anfallgas zugegeben wird.

**Revendications**

1. Procédé de traitement d'un effluent gazeux d'incinérateur comprenant de la dioxine, des métaux lourds et des $NO_x$, qu'on fait passer de l'incinérateur au travers d'un conduit de fumées à un collecteur de poussière, en introduisant uniquement du persulfate d'ammonium en tant qu'agent traitant dans l'incinérateur.

2. Procédé de traitement d'un effluent gazeux d'incinérateur comprenant de la dioxine, des métaux lourds et des $NO_x$, qu'on fait passer de l'incinérateur au travers d'un conduit de fumées à un collecteur de poussière, en introduisant uniquement du persulfate d'ammonium en tant qu'agent traitant dans le conduit de fumées à une position où la température dépasse 400 °C de sorte que le persulfate d'ammonium subit une décomposition thermique.

3. Procédé selon la revendication 2, dans lequel l'effluent gazeux déchargé du collecteur de poussière est introduit dans un appareil de dénitration catalytique.

4. Procédé selon l'une quelconque des revendications 1 à 3, dans lequel le persulfate d'ammonium est introduit en une proportion supérieure à 0,01 g par $Nm^3$ d'effluent gazeux sec.

FIG. 1

FIG. 2

FIG. 3

SPRAYING OF
AMMONIUM PERSULFATE

7          10          11          12

| INCINERATOR | → | FLUE FOR HEAT RECOVERY (OR WASTE GAS COOLING) | → | DUST COLLECTOR | → | CATALYTIC DENITRATING UNIT | → |

ABOVE        BELOW
400°C        400°C

FIG. 4

CONCENTRATION OF DIOXIN $(ng/m^3N)$

$\times 10^4$
$\times 10^3$
$\times 10^2$

FEEDING OF AMMONIUM PERSULFATE INTO THE INCINERATOR

○ NONE

■ YES

CONCENTRATION OF CO (ppm)

FIG. 5